# EUROPEAN PATENT SPECIFICATION

(11) **EP 1 568 470 B1**
(45) Date of publication and mention of the grant of the patent: **16.04.2014**
(21) Application number: 05004119.3
(22) Date of filing: 25.02.2005
(51) Int. Cl.: B29C 65/16, G01P 15/00, B29L 22/00

(54) **Laser welding of resin members using a ridge for enhancing weld strength**
Laserschweissen von Kunststoffteilen unter Verwendung einer Kante zur Verbesserung der Schweissfestigkeit
Soudage laser d'éléments en résine utilisant une arête pour améliorer la résistance de la soudure

(30) Priority: 27.02.2004 JP 2004054406
(43) Date of publication of application: 31.08.2005
(73) Proprietor: DENSO CORPORATION, Kariya-city, Aichi-pref., 448-8661 (JP)
(72) Inventor: Oonishi, Jun, Kariya-city Aichi-pref., 448-8661 (JP)
(74) Representative: Winter, Brandl, Fürniss, Hübner, Röss, Kaiser, Polte - Partnerschaft

(56) References cited:
- JP-A- 2001 246 488
- US-A- 5 276 303
- US-A1- 2006 068 161

## Description

### BACKGROUND OF THE INVENTION

### 1 Technical Field of the Invention

The present invention relates generally to laser welding of resin members. More particularly, the invention relates to a method of laser welding two resin members using a ridge for enhancing the weld strength of a laser welding between a resin article and a mating resing article and a housing that is made by the method of laser welding and used to accomodate electrical or electronic components.

### 2 Description of the Related Art

There are several existing methods of joining resin members by laser welding.

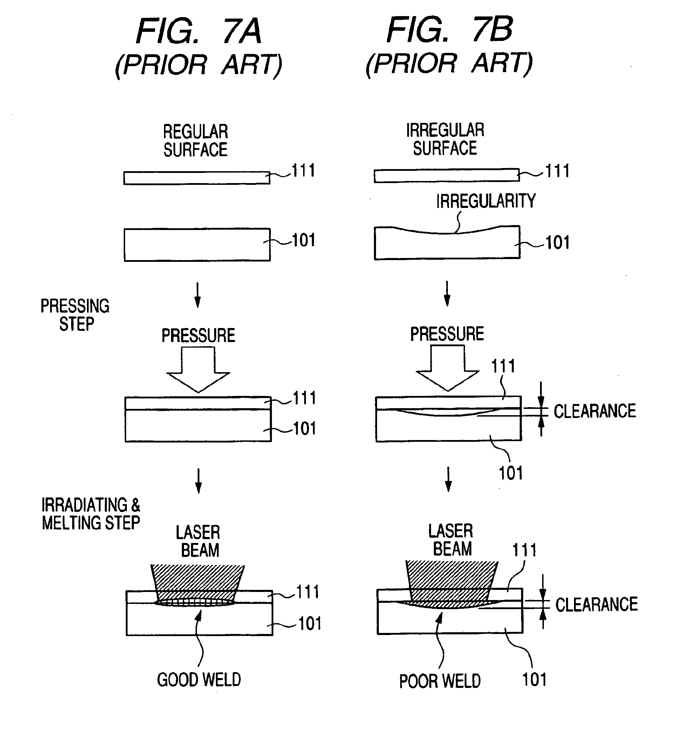

FIG. 7A shows a first example of joining two resin members by laser welding. In the figure, two resin members 101 and 111 each have a joining surface. In the laser welding, the joining surfaces of the resin members 101 and 111 are first brought into contact with each other. Secondly, in the pressing step of the laser welding, the resin member 111 is pressed against the resin member 101 to eliminate the clearance between the two joining surfaces. Thirdly, in the irradiating and melting step of the laser welding, the joining surface of the resin member 101 is irradiated and melted with a laser beam, thereby joining the two resin members 101 and 111 together.

In FIG. 7A, the joining surfaces of the resin members 101 and 111 are regularly formed by resin molding without any sink marks or waviness. Therefore, the clearance between the joining surfaces of the two resin members can be completely eliminated in the pressing step.

However, as shown in FIG. 7B, when the joining surface of the resin member 101 is irregularly formed by resin molding, it becomes difficult to completely eliminate the clearance between the joining surfaces of the two resin members or reduce the clearance to a level of less than 0.1 mm in the pressing step. Consequently, in the flowing irradiating and melting step, the heat generated by irradiating the joining surface of the resin member 101 with a laser beam cannot be effectively conducted to the joining surface of the resin member 111. As a result, the two resin members 101 and 111 cannot be welded together with high weld strength.

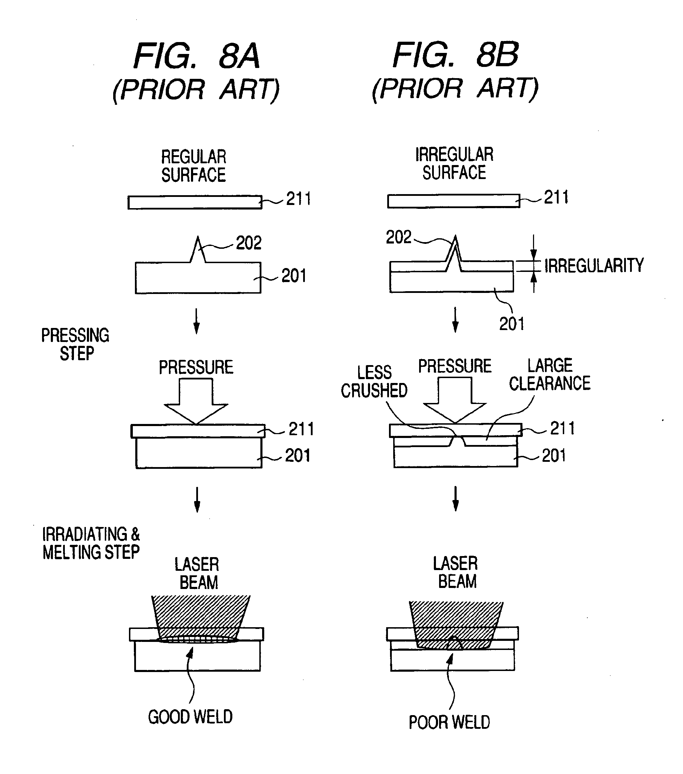

FIG. 8A shows a second example of joining two resin members by laser welding. In the figure, two resin members 201 and 211 each have a joining surface. The resin member 201 further has a ridge 202 that is formed on the joining surface of the resin member 201. The ridge 202 has a cross section that is shaped in a triangle. The triangle has a side on the joining surface and the other two sides forming an acute angle at the apex opposed to the joining surface. In the laser welding, the resin member 211 is first placed on the resin member 201, so that the joining surfaces of the two resin members face each other with the ridge 202 interposed therebetween. Secondly, in the pressing step of the laser welding, the resin member 211 is pressed against the resin member 201, so that the ridge 202 is completely crushed, thereby eliminating the clearance between the joining surfaces of the two resin members. Thirdly, in the irradiating and melting step of the laser welding, the joining surface of the resin member 201 is irradiated and melted with a laser beam, thereby joining the two resin members 201 and 211 together.

In FIG. 8A, the joining surfaces of the resin members 201 and 211 and the surface of the ridge 202 are regularly formed by resin molding without any sink marks or waviness. Therefore, the ridge 202 can be completely crushed to eliminate the clearance between the joining surfaces of the two resin members in the pressing step.

However, as shown in FIG. 8B, when the joining surface of the resin member 201 and the surface of the ridge 202 are irregularly formed by resin molding, it becomes difficult to completely crush the ridge 202 so as to completely eliminate the clearance between the joining surfaces of the two resin members in the pressing step. Consequently, in the following irradiating and melting step, the weld zone between the two resin members 201 and 211 becomes small, resulting in low weld strength of the laser welding.

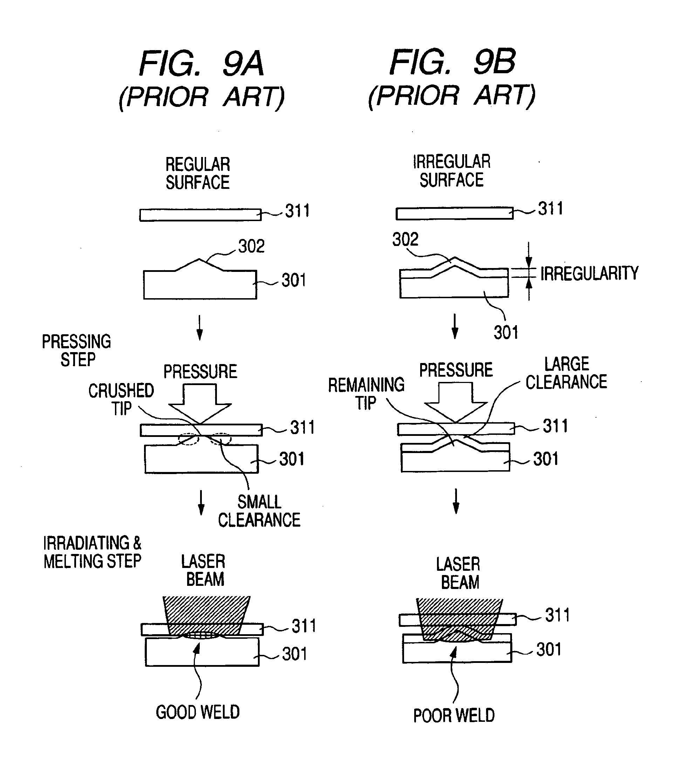

FIG. 9A shows a third example of joining two resin members by laser welding. In the figure, two resin members 301 and 311 each have a joining surface. The resin member 301 further has a ridge 302 that is formed on the joining surface of the resin member 301. The ridge 302 has a cross section that is shaped in a triangle. The triangle has a side on the joining surface and the other two sides forming an obtuse angle at the apex opposed to the joining surface. In the laser welding, the resin member 311 is first placed on the resin member 301, so that the joining surfaces of the two resin members face each other with the ridge 302 interposed therebetween. Secondly, in the pressing step of the laser welding, the resin member 311 is pressed against the resin member 301, so that a tip portion of the ridge 302 is crushed, leaving a remaining portion of the same between the joining surfaces of the two resin members. Thirdly, in the irradiating and melting step of the laser welding, the remaining portion of the ridge 302 is irradiated and melted with a laser beam, thereby joining the two resin members 301 and 311 together.

In FIG. 9A, the joining surfaces of the resin members 301 and 311 and the surface of the ridge 302 are regularly formed by resin molding without any sink marks or waviness. Therefore, the tip portion of the ridge 302 can be crushed in the pressing step, leaving the remaining portion of the same available for irradiating and melting.

However, as shown in FIG. 9B, when the joining surface of the resin member 301 and the surface of the ridge 302 are irregularly formed by resin moulding, it becomes difficult to crush the tip portion of the ridge 302 in the pressing step. Accordingly, there exists a clearance between the tip portion of the ridge 302 and the joining surface of the resin member 311 due to the irregularity of the surface of the ridge 302. Consequently, in the following irradiating and melting step, the heat generated by irradiating the ridge 302 of the resin member 301 with a laser beam cannot be effectively conducted to the joining surface of the resin member 311. As a result, the two resin members 301 and 311 cannot be welded together with high weld strength.

Patent document US 5276303A discloses an arrangement for providing improved efficiency in laser welding. In particular, the disclosed arrangement includes a first member and a second member, wherein the second member is sufficiently transparent to the wavelength of the impinging radiation. The second member includes a concentrating region, shaped to direct the radiation toward the weld site.

Patent document JP 2001246488A discloses a method of manufactring a container which includes an open-box shaped base member and a cover member. The base member is made of a nontransparent resin, wherein the cover member is made of a transparent resin. A laser beam is passed through a mask, thereby being shaped to cover the entire interface between the cover member and the base member. The shaped laser beam is then irradiated to the interface from the cover member side, thereby welding the two members together.

### SUMMARY OF THE INVENTION

The present invention has been made in view of the above-mentioned problems.
It is, therefore, a primary object of the present invention to provide a method of laser welding two resin members using an improved structure ensuring the weld strength of a laser welding between a resin article and a mating resin article, and a housing that is made by the method of laser welding and used to accomodate electrical or electronic components.

According to the background of the invention a resin article is provided which includes:
a body having a joining surface that is to be joined to a mating resin article by laser welding; and
a ridge for forming a weld between the joining surface of the body and the mating resin article by pressing one of the two articles against the other and irradiating the ridge with a laser beam, the ridge being formed with a length on the joining surface of the body and including a base portion formed on the joining surface and a tip portion formed on the base portion, both of which extend in a lengthwise direction of the ridge, the base portion, which is to be irradiated with the laser beam, having a cross section perpendicular to the lengthwise direction of the ridge which has a minimum width at an interface between the base portion and the tip portion and expands from the interface toward the joining surface of the body at a predetermined rate, the tip portion, which is to be completely crushed by the pressing, having a cross section perpendicular to the lengthwise direction of the ridge which expands from a tip end thereof toward the interface between the base portion and the tip portion at a predetermined rate less than that of the cross section of the base portion and has a maximum width at the interface which is equal to or less than the minimum width of the cross section of the base portion.

With such a structure, when the resin article is joined to the mating resin article by laser welding, the tip portion of the ridge can be completely crushed in the pressing step of the laser welding, regardless of whether the surface of the ridge and the joining surface of the body are formed with irregularities. Accordingly, the base portion of the ridge can be brought into intimate contact with the mating resin article without any clearance therebetween.

Further, though irradiating and melting the base portion, which has the greater width and expansion rate in the cross section, a sufficiently large weld zone can be secured between the two resin articles, thereby ensuring high weld strength of the laser welding.

In the above resin article according to the invention, the cross section of the tip portion of the ridge may be shaped in a triangle that has a side on the interface between the base portion and the tip portion and an apex forming the tip end of the cross section. The maximum width of the tip portion, which is the length of the side of the triangle, may be equal to or less than the minimum width of the cross section of the base portion.

The cross section of the tip portion may also be shaped in a trapezoid that has a longer side on the interface between the base portion and the tip portion and a shorter side forming the tip end of the cross section.

Further, the cross section of the tip portion may also be shaped in a rectangle that has an opposite pair of sides one of which lies on the interface between the base portion and the tip portion and the other forms the tip end of the cross section.

Moreover, in the above resin article according to the invention, the predetermined rate, at which the cross section of the tip portion expands, may change discontinuously from the tip end of the cross section of the tip portion toward the interface between the base portion and the tip portion.

Furthermore, the predetermined rate, at which the cross section of the tip portion expands, may also change continuously from the tip end of the cross section of the tip portion toward the interface between the base portion and the tip portion.

According to a first aspect of the present invention, a method of laser welding two resin members is provided which includes the steps of:
providing a first and a second resin member each having a joining surface;
forming a ridge with a length on the joining surface of one of the first and second resin members, the ridge including a base portion formed on the joining surface and a tip portion formed on the base portion, both of which extend in a lengthwise direction of the ridge, the base portion having a cross section perpendicular to the lengthwise direction of the ridge which has a minimum width at an interface between the base portion and the tip portion and expands from the interface toward the joining surface at a predetermined rate, the tip portion having a cross section perpendicular to the lengthwise direction of the ridge which expands from a tip end thereof toward the interface between the base portion and the tip portion at a predetermined rate less than that of the cross section of the base portion and has a maximum width at the interface which is equal to or less than the minimum width of the cross section of the base portion;
placing one of the first and second resin members on the other so that the joining surfaces of the first and second resin members face each other with the ridge interposed therebetween;
pressing one of the first and second resin members against the other so as to completely crush the tip portion of the ridge, leaving only the base portion of the same between the joining surfaces of the first and second resin members; and
irradiating the base portion of the ridge with a laser beam while continuously pressing one of the first and second resin members against the other.

With such a method of laser welding, the tip portion of the ridge can be completely crushed in the pressing step, regardless of whether the surface of the ridge and the joining surfaces of the two resin members are formed with irregularities. Accordingly, the base portion of the ridge can be brought into an intimate contact with the joining surface of the mating resin member without any clearance therebetween.

Further, though irradiating and melting the base portion, which has the greater width and expansion rate in the cross section, a sufficiently large weld zone can be secured between the two resin members, thereby ensuring high weld strength of the laser welding.

According to a third aspect of the present invention, a housing for accommodating at least one electrical or electronic component is provided, which is made through laser welding at least two resin members thereof by the method according the present invention.

In the above housing, the resin members are joined together without applying any vibrations thereto. Further, heat is generated only in the base portion of the ridge that is formed and irradiated with a laser beam during the laser welding of the resin members by the method according to the invention. Consequently, the at least one electrical or electronic component accommodated in the housing is prevented from being damaged due to vibrations or heat which otherwise may be applied to the joining resin members.

In the above housing according to the invention, the at least one electrical or electronic component, which is accommodated in the housing, may be an electronic sensor, such as a G sensor.

### BRIEF DESCRIPTION OF THE DRAWINGS

The present invention will be understood more fully from the detailed description given hereinafter and from the accompanying drawings of the preferred embodiments of the invention, which, however, should not be taken to limit the invention to the specific embodiments but are for the purpose of explanation and understanding only.

In the accompanying drawings:
FIG. 1A is a perspective view showing a resin article according to the first embodiment of the invention;
FIG. 1B is an enlarged view showing a ridge of the resin article of FIG. 1;
FIG. 2 is a view illustrating a method of laser welding the resin article of FIG. 1 to a mating resin article in the case that the resin article is regularly formed;
FIG. 3 is a view illustrating a laser welding of the resin article of FIG. 1 to a mating resin article in the case that the resin article is irregularly formed;
FIG. 4A is a schematic view showing an acceleration detecting apparatus that includes a resin housing according to the second embodiment of the invention;
FIG. 4B is an enlarged view showing a ridge formed on an end face of a resin open case that is to be laser welded to a resin lid so as to form the resin housing of FIG. 4A;
FIG. 5 is a view illustrating a laser welding of the resin open case to the resin lid to form the resin housing of FIG. 4A;
FIGS. 6A - 6E are views illustrating variations of the ridge of FIG. 1B according to the present invention;
FIG. 7A is a view illustrating a laser welding of two resin members by a first existing method in the case that both the resin members are regularly formed;
FIG. 7B is a view illustrating a laser welding of two resin members by the first existing method in the case that one of the two resin members is irregularly formed;
FIG. 8A is a view illustrating a laser welding of two resin members by a second existing method in the case that both the resin members are regularly formed;
FIG. 8B is a view illustrating a laser welding of two resin members by the second existing method in the case that one of the two resin members is irregularly formed;
FIG. 9A is a view illustrating a laser welding of two resin members by a third existing method in the case that both the resin members are regularly formed; and
FIG. 9B is a view illustrating a laser welding of two resin members by the third existing method in the case that one of the two resin members is irregularly formed.

### DESCRIPTION OF THE PREFERRED EMBODIMENTS

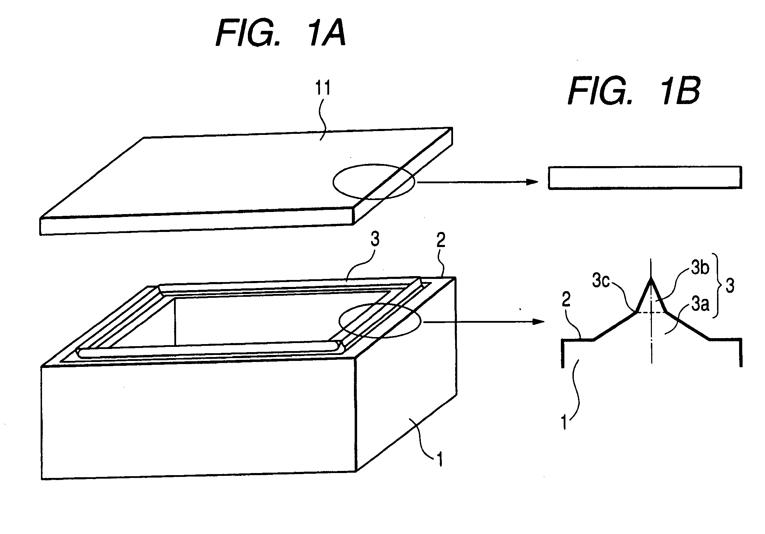

The preferred embodiments of the present invention will be described hereinafter with reference to FIGS. 1 - 9.

### [First embodiment]

This embodiment illustrates a resin article 1 according to the invention, which is shown in FIGS. 1A - 1B, and a method of laser welding the resin article 1 to a mating resin article in accordance with the invention.

The resin article 1 is an open box in this embodiment; it will be joined to a mating resin article 11, which is a lid in this embodiment to cover the open box, by laser welding. Both the resin articles 1 and 2 are made by resin molding.

The resin article 1 has, as shown in FIG. 1A, an upper end face 2 and a ridge 3. The upper end face 2 serves as a joining surface that is to be joined to a joining surface of the resin article 11 by laser welding. The ridge 3 is formed, with a length, on the upper end face 2.

Referring to FIG. 1B, the ridge 3 includes a base portion 3a formed on the upper end face 2 and a tip portion 3b formed on the base portion 3a, both of which extend in a lengthwise direction of the ridge 3.

The base portion 3a has a cross section perpendicular to the lengthwise direction of the ridge 3, which is shaped in a trapezoid in the present embodiment. Accordingly, the cross section of the base portion 3a has a minimum width at an interface 3c between the base portion 3a and the tip portion 3b, and expands from the interface 3c toward the upper end face 2 at a given rate.

The tip portion 3b has a cross section perpendicular to the lengthwise direction of the ridge 3, which is shaped in a triangle in the present embodiment.

The triangle has a side on the interface 3c and the other two sides that together form an acute angle at the apex opposite to the interface 3c. In other words, the cross section of the tip portion 3b expands from the tip end thereof (i.e., the apex of the triangle) toward the interface 3c at a given rate less than that of the cross section of the base portion 3a.

Further, the maximum width of the tip portion 3b, which is the length of the side of the triangle on the interface 3c, is equal to the minimum width of the cross section of the base portion 3a.

The resin article 1 can be joined to the resin article 11 by laser welding in the following way.

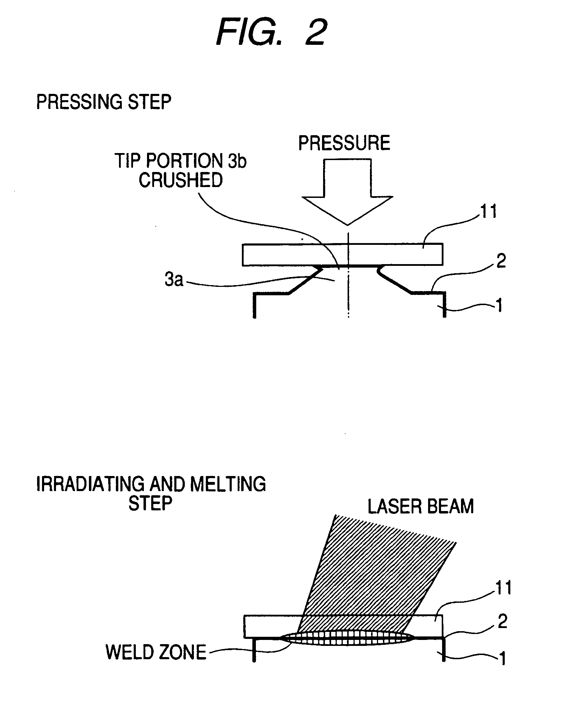

First, with reference to FIG. 2, the resin article 1 is fixed such that the upper end face 2 thereof faces upward. Then, the resin article 11 is placed on the resin article 1 so that the upper end face 2 of the resin article 1 faces the joining surface of the resin article 11 with the ridge 3 interposed therebetween.

Secondly, in the pressing step of the laser welding, the resin article 11 is pressed against the resin article 1 with a jig (not shown), until the tip portion 3b of the ridge 3 is completely crushed.

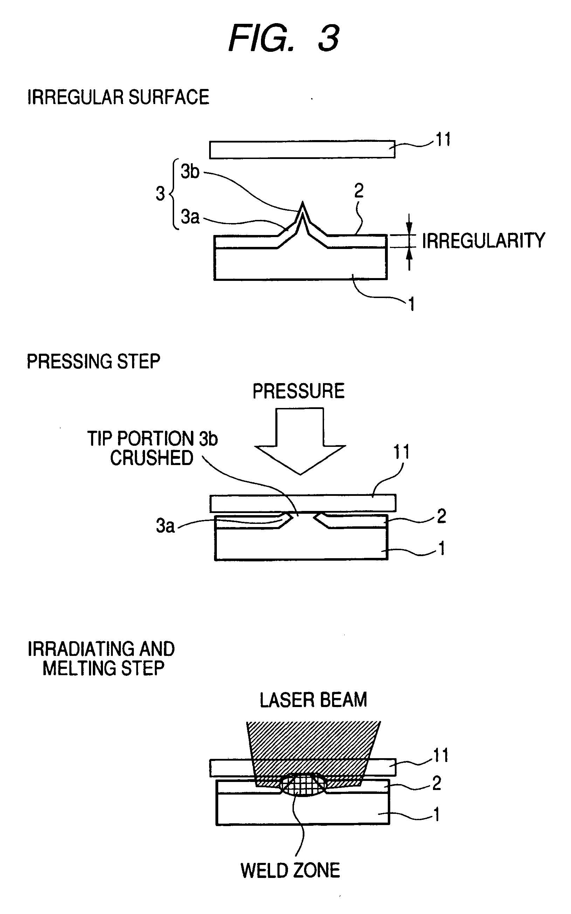

It should be noted that, in FIG. 2, the upper end face 2 and the surface of the ridge 3 are regularly formed by resin molding without any sink marks or waviness. However, even when the upper end face 2 and the surface of the ridge 3 are irregularly formed by resin molding as shown in FIG. 3, it is still possible to completely crush the tip portion 3b of the ridge 3. This is because the cross section of the tip portion 3b has the smaller width and expansion rate as described previously.

Consequently, the base portion 3a of the ridge 3 is brought into intimate contact with the joining surface of the resin article 11, without any clearance therebetween.

Thirdly, in the irradiating and melting step, the base portion 3a of the ridge 3 is irradiated with a laser beam, while the resin article 11 is continuously pressed against the resin article 1. As a result, the resin of the base portion 3a is melted and deposited to the joining surface of the resin article 11, thereby joining the two resin articles 1 and 11 together.

It should be noted that, since the cross section of the base portion 3a has the greater width and expansion rate as described previously, it is possible to secure a sufficiently large weld zone between the two resin articles 1 and 11.

Consequently, the resin articles 1 and 11 are welded together with high weld strength.

To sum up, the resin article 1 according to the background of invention includes the upper end face 2 and the ridge 3.

The upper end face 2 is to be joined to a mating resin article (e.g., the lid 11 in this embodiment) by laser welding.

The ridge 3 is formed with a length on the upper end face 2 and includes a base portion 3a formed on the upper end face 2 and a tip portion 3b formed on the base portion 3a, both of which extend in the lengthwise direction of the ridge 3.

The base portion 3a has a cross section perpendicular to the lengthwise direction of the ridge 3, which has a minimum width at the interface 3c between the base portion 3a and the tip portion 3b and expands from the interface 3c toward the upper end face 2 at a predetermined rate.

The tip portion 3b has a cross section perpendicular to the lengthwise direction of the ridge 3, which expands from a tip end thereof toward the interface 3c between the base portion 3a and the tip portion 3b at a predetermined rate less than that of the cross section of the base portion 3a and has a maximum width at the interface 3c which is equal to or less than the minimum width of the cross section of the base portion 3a.

With such a structure, when the resin article 1 is joined to the mating resin article by laser welding, the tip portion 3b of the ridge 3 can be completely crushed in the pressing step of the laser welding, regardless of whether the surface of the ridge 3 and the upper end face 2 are formed with irregularities. Accordingly, the base portion 3a of the ridge 3 can be brought into an intimate contact with the mating resin article without any clearance therebetween.

Further, though irradiating and melting the base portion 3a, a sufficiently large weld zone can be secured between the two resin articles, thereby ensuring high weld strength of the laser welding.

### [Second embodiment]

This embodiment illustrates a resin housing according to the present invention, which is used to accommodate electrical or electronic components.

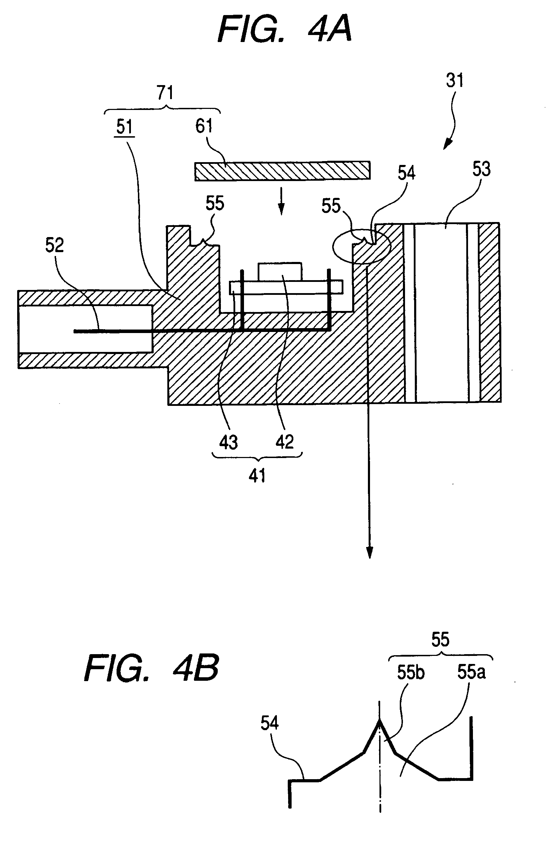

Referring to FIG. 4A, there is shown an acceleration detecting apparatus 31, which is to be installed in a front portion of an automobile. The acceleration detecting apparatus 31 is configured to generate an acceleration signal, which indicates occurrence of collision or vibrations, and output the acceleration signal to an air bag control system of the automobile.

The acceleration detecting apparatus 31 mainly includes an electrical circuit portion 41, an open case 51 to accommodate the electrical circuit portion 41, and a lid 61 to cover an open end (i.e., the upper end in FIG. 4A) of the case 51.

The electrical circuit portion 41 includes a G sensor (or acceleration sensor) 42 and a plastic board 43. The G sensor 42 has a sensing portion and is configured to generate the acceleration signal depending on deformation and movement of the sensing portion. The plastic board 43 is a glass epoxy substrate, on which the G sensor 42 and an electrical circuit for outputting the acceleration signal generated by the G sensor 42 are mounted.

The open case 51 is made of a resin, such as a PBT (polybutylene) resin, a Nylon resin, and or the like, by resin molding. The case 51 is integrally formed with a connector terminal 52 that supports the electrical circuit portion 41 accommodated in the case 51. The connector terminal 52 is made of a metal material and used to electrically connect the electrical circuit portion 41 with external devices or circuits. The case 51 has a fixing portion 53, in which a metal bush is provided, for fixing the case 51 to the automobile.

The case 51 further has an upper end face 54, on which a ridge 55 is formed with a length along the circumference of the upper end face 54. The ridge 55 has the same shape as the ridge 3 in the previous embodiment.

Specifically, with reference to FIG.4B, the ridge 55 has a base portion 55a formed on the upper end face 54 and a tip portion 55b formed on the base portion 55a, both of which extend in the lengthwise direction of the ridge 55.

The base portion 55a has a cross section perpendicular to the lengthwise direction of the ridge 55, which is shaped in a trapezoid. The tip portion 55b has a cross section perpendicular to the lengthwise direction of the ridge 55, which is shaped in a triangle. The triangle has a side on the interface between the base portion 55a and the tip portion 55b and the other two sides that together form an acute angle at the apex opposite to the interface.

The lid 61 is also made of a resin, such as a PBT resin, a Nylon resin, and or the like, by resin molding. The lid 61 is to be joined to the case 51 by laser welding, so as to form a hermetically closed housing (or case) 71 together with the case 51.

The laser welding of the case 51 to the lid 61 can be performed as follows.

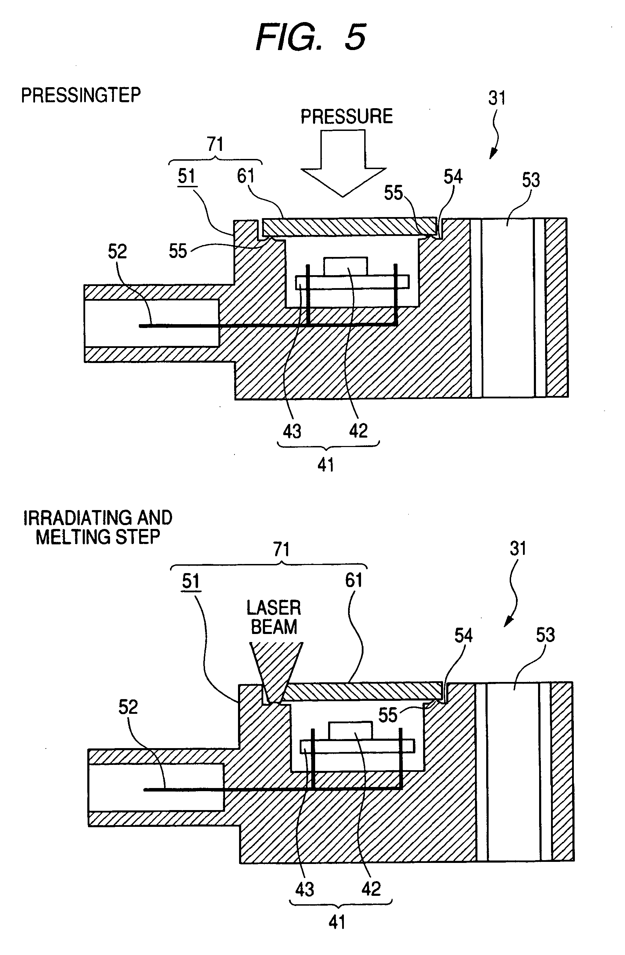

First, with reference to FIG. 5, the case 51 is fixed, together with the electrical circuit portion 41 accommodated therein, such that the upper end face 54 of the case 51 faces upward. Then, the lid 61 is placed on the case 51 so that the upper end face 54 of the case 51 faces a joining surface (i.e., the lower surface in FIG. 5) of the lid 61 with the ridge 55 interposed therebetween.

Secondly, in the pressing step of the laser welding, the lid 61 is pressed against the case 51 with a jig (not shown), until the tip portion 55b of the ridge 55 is completely crushed. Consequently, the base portion 55a of the ridge 55 is brought into an intimate contact with the joining surface of the lid 61, without any clearance therebetween.

Thirdly, in the irradiating and melting step, the base portion 55a of the ridge 55 is irradiated with a laser beam, while the lid 61 is continuously pressed against the case 51. Consequently, the resin of the base portion 55a is melted and deposited to the joining surface of the lid 61, thereby joining the case 51 and lid 61 together.

As a result, the case 51 and lid 61 are welded together with high weld strength, thereby providing the housing 71 in which the electrical circuit portion 41 is accommodated.

In this embodiment, the case 51 and lid 61 are joined together without applying any vibrations thereto. Further, heat is generated only in the base portion 55a that is irradiated and melted with the laser beam. Consequently, the G sensor 42 accommodated in the housing 71 is prevented from being damaged due to vibrations or heat which otherwise may be applied to the case 51 and lid 61.

Specifically, the G sensor 42 is an electronic device that is not resistive to high temperature. Therefore, if the case 51 and lid 61 are joined together by heat plate welding, the G sensor 42 may be subject to high temperature and thus be damaged.

Further, the G sensor 42, which is configured to generate the acceleration signal depending on deformation and movement of the sensing portion thereof, necessarily has a resonance frequency at which a resonance may occur. Therefore, if the case 51 and lid 61 are joined together by vibration welding or ultrasonic welding, it is likely that a vibrational frequency in those welding processes comes into coincidence with the resonance frequency of the G sensor 42, thus causing the G sensor 42 to be damaged.

### [Variations]

While the above particular embodiments of the invention have been shown and described, it will be understood by those who practice the invention and those skilled in the art that various modifications, changes, and improvements may be made to the invention without departing from the scope of protection that is defined by the claims.

For example, in the first embodiment of the invention, the cross section of the ridge 3 perpendicular to the lengthwise direction of the same has the shape as shown in FIG. 1B.

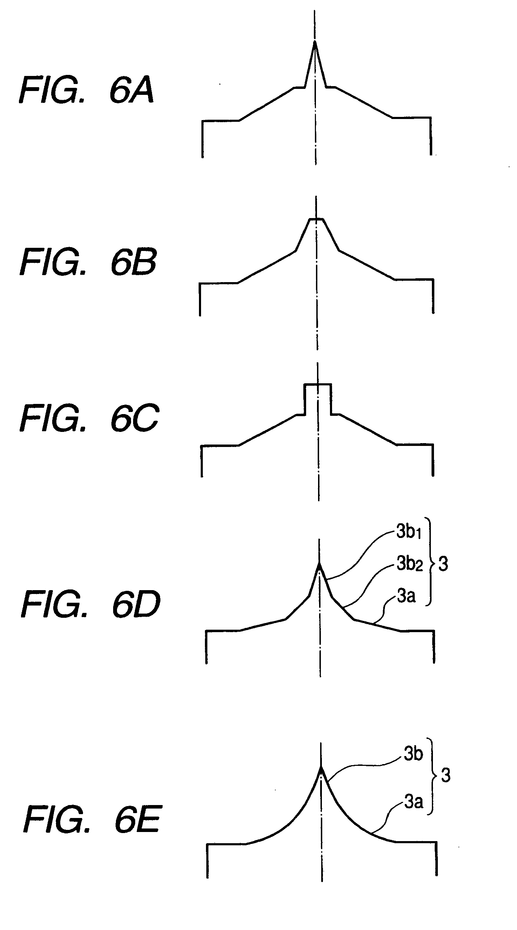

However, besides the shape shown in FIG. 1B, the cross section of the ridge 3 may have various shapes, such as those shown in FIG. 6A - 6D.

In FIG. 6A, the cross section of the tip portion 3b is shaped in a triangle similar to that in FIG. 1B. Specifically, the triangle has a side on the interface between the base portion 3a and the tip portion 3b and the other two sides forming an acute angle at the apex opposed to the interface. However, in FIG. 6A, the maximum width of the tip portion 3b, which is the length of the side on the interface, is less than the minimum width of the cross section of the base portion 3a.

In FIG. 6B, the cross section of the tip portion 3b is shaped in a trapezoid, instead of a triangle. The trapezoid has an opposite pair of sides; the longer one of the opposite pair lies on the interface between the base portion 3a and the tip portion 3b, while the shorter one forms the tip end of the cross section.

In FIG. 6C, the cross section of the tip portion 3b is shaped in a rectangle that has an opposite pair of sides one of which lies on the interface between the base portion 3a and the tip portion 3b and the other forms the tip end of the cross section.

In FIG. 6D, the cross section of the tip portion 3b expands from the tip end thereof toward the interface between the base portion 3a and the tip portion 3b at a given rate that changes discontinuously from the tip end toward the interface.

In FIG. 6E, the cross section of the tip portion 3b expands from the tip end thereof toward the interface between the base portion 3a and the tip portion 3b at a given rate that changes continuously from the tip end toward the interface.

Moreover, in the second embodiment of the invention, the housing 71 is used to accommodate the G sensor 42.

However, such a housing may also be used to accommodate any other electrical or electronic components.

Such modifications, changes, and improvements may be made of the invention without departing from the scope of protection that is defined by the claims.

## Claims

1. A method of joining two resin members (1, 11) by laser welding, comprising the steps of:
providing a first and a second resin member (1, 11) each having a joining surface (2);
forming a ridge (3) with a length on the joining surface of one of the first and second resin members (1, 11), the ridge (3) including a base portion (3a) formed on the joining surface (2) and a tip portion (3b) formed on the base portion (3a), both of which extend in a lengthwise direction of the ridge (3), the base portion (3a) having a cross section perpendicular to the lengthwise direction of the ridge (3) which has a minimum width at an interface between the base portion (3a) and the tip portion (3b) and expands from the interface toward the joining surface (2) at a predetermined rate, the tip portion (3b) having a cross section perpendicular to the lengthwise direction of the ridge (3) which expands from a tip end thereof toward the interface between the base portion (3a) and the tip portion (3b) at a predetermined rate less than that of the cross section of the base portion (3a) and has a maximum width at the interface which is equal to or less than the minimum width of the cross section of the base portion (3a);
placing one of the first and second resin members (1, 11) on the other so that the joining surfaces (2) of the first and second resin members face each other with the ridge (3) interposed therebetween;
pressing one of the first and second resin members (1, 11) against the other so as to crush the tip portion (3b) of the ridge (3), leaving only the base portion (3a) of the same between the joining surfaces (2) of the first and second resin members; and
irradiating the base portion (3a) of the ridge with a laser beam while continuously pressing one of the first and second resin members against the other.

2. The method of joining two resin members (1, 11) by laser welding as set forth in Claim 1, wherein the cross section of the tip portion (3b) is shaped in a triangle that has a side on the interface between the base portion (3a) and the tip portion (3b) and an apex forming the tip end of the cross section, and wherein the maximum width of the tip portion (3b), which is the length of the side of the triangle, is equal to the minimum width of the cross section of the base portion (3a).

3. The method of joining two resin members by laser welding as set forth in Claim 1, wherein the cross section of the tip portion (3b) is shaped in a triangle that has a side on the interface between the base portion (3a) and the tip portion (3b) and an apex forming the tip end of the cross section, and wherein the maximum width of the tip portion (3b), which is the length of the side of the triangle, is less than the minimum width of the cross section of the base portion (3a).

4. The method of joining two resin members by laser welding as set forth in Claim 1, wherein the cross section of the tip portion (3b) is shaped in a trapezoid that has a longer side on the interface between the base portion (3a) and the tip portion (3b) and a shorter side forming the tip end of the cross section.

5. The method of joining two resin members by laser welding as set forth in Claim 1, wherein the cross section of the tip portion (3b) is shaped in a rectangle that has an opposite pair of sides one of which lies on the interface between the base portion (3a) and the tip portion (3b) and the other forms the tip end of the cross section.

6. The method of joining two resin members by laser welding as set forth in Claim 1, wherein the predetermined rate, at which the cross section of the tip portion expands, changes discontinuously from the tip end of the cross section of the tip portion (3b) toward the interface between the base portion (3a) and the tip portion (3b).

7. The method of joining two resin members by laser welding as set forth in Claim 1, wherein the predetermined rate, at which the cross section of the tip portion (3b) expands, changes continuously from the tip end of the cross section of the tip portion (3b) toward the interface between the base portion (3a) and the tip portion (3b).

8. A housing for accommodating at least one electrical or electronic component, the housing being made through joining at least two resin members (1, 11) thereof together by laser welding according to the method as set forth in Claim 1.

9. The housing as set forth in Claim 8, wherein the at least one electrical or electronic component, which is accommodated in the housing, is an electronic sensor.

10. The housing as set forth in Claim 9, wherein the electronic sensor is a G sensor (42).

## Patentansprüche

1. Verfahren zum Verbinden zweier Harzteile (1, 11) durch Laserschweißen, das die Schritte beinhaltet:
Vorsehen eines ersten und eines zweiten Harzteils (1, 11), welche je eine Verbindungsoberfläche (2) haben,
Bilden eines Grats (3) mit einer Länge an der Verbindungsoberfläche eines der Harzteile erstes und zweites Harzteil (1, 11), wobei der Grat (3) einen Grundabschnitt (3a), welcher an der Verbindungsoberfläche (2) gebildet ist, und einen Kopfabschnitt (3b), welcher an dem Grundabschnitt (3a) gebildet ist, einschließt, welche sich beide in einer Längsrichtung des Grats (3) erstrecken, wobei der Grundabschnitt (3a) orthogonal zu der Längsrichtung des Grats (3) einen Querschnitt aufweist, welcher an einer Schnittstelle zwischen dem Grundabschnitt (3a) und dem Kopfabschnitt (3b) eine minimale Breite aufweist und sich von der Schnittstelle zu der Verbindungsoberfläche (2) hin mit einer vorab festgelegten Rate ausdehnt, und wobei der Kopfabschnitt (3b) orthogonal zu der Längsrichtung des Grats (3) einen Querschnitt aufweist, welcher sich von einem Kopfende davon zu der Schnittstelle zwischen dem Grundabschnitt (3a) und dem Kopfabschnitt (3b) hin mit einer vorab festgelegten Rate, die geringer als diejenige des Querschnitts des Grundabschnitts (3a) ist, ausdehnt, und welcher an der Schnittstelle eine maximale Breite aufweist, die gleich der minimalen Breite des Querschnitts des Grundabschnitts (3a) ist oder geringer als diese ist,
Platzieren eines der Harzteile erstes und zweites Harzteil (1, 11) so an dem anderen, dass die Verbindungsoberflächen (2) des ersten und zweiten Harzteils einander zugewandt sind, wobei der Grat (3) zwischen diese zwischengefügt ist,
Pressen eines der Harzteile erstes und zweites Harzteil (1, 11) so an das andere, dass der Kopfabschnitt (3b) des Grats (3) gequetscht wird, wobei nur der Grundabschnitt (3a) desselben zwischen den Verbindungsoberflächen (2) des ersten und zweiten Harzteils bleibt, und
Bestrahlen des Grundabschnitts (3a) des Grats mit einem Laserstrahl unter kontinuierlichem Pressen von einem der Harzteile erstes und zweites Harzteil gegen das andere.

2. Verfahren zum Verbinden zweier Harzteile (1, 11) durch Laserschweißen wie in Anspruch 1 dargelegt, wobei der Querschnitt des Kopfabschnitts (3b) als ein Dreieck geformt ist, welches eine Seite an der Schnittstelle zwischen dem Grundabschnitt (3a) und dem Kopfabschnitt (3b) sowie einen Scheitel, der das Kopfende des Querschnitts bildet, aufweist, und wobei die maximale Breite des Kopfabschnitts (3b), welches die Länge der Seite des Dreiecks ist, gleich der minimalen Breite des Querschnitts des Grundabschnitts (3a) ist.

3. Verfahren zum Verbinden zweier Harzteile durch Laserschweißen wie in Anspruch 1 dargelegt, wobei der Querschnitt des Kopfabschnitts (3b) als ein Dreieck geformt ist, welches eine Seite an der Schnittstelle zwischen dem Grundabschnitt (3a) und dem Kopfabschnitt (3b) sowie einen Scheitel, der das Kopfende des Querschnitts bildet, aufweist, und wobei die maximale Breite des Kopfabschnitts (3b), welches die Länge der Seite des Dreiecks ist, geringer als die minimale Breite des Querschnitts des Grundabschnitts (3a) ist.

4. Verfahren zum Verbinden zweier Harzteile durch Laserschweißen wie in Anspruch 1 dargelegt, wobei der Querschnitt des Kopfabschnitts (3b) als ein Trapezoid geformt ist, welches eine längere Seite an der Schnittstelle zwischen dem Grundabschnitt (3a) und dem Kopfabschnitt (3b) und eine kürzere Seite, welche das Kopfende des Querschnitts bildet, aufweist.

5. Verfahren zum Verbinden zweier Harzteile durch Laserschweißen wie in Anspruch 1 dargelegt, wobei der Querschnitt des Kopfabschnitts (3b) als ein Rechteck geformt ist, welches ein entgegen gesetztes Paar an Seiten aufweist, von denen eine an der Schnittstelle dem Grundabschnitt (3a) und dem Kopfabschnitt (3b) liegt, und von denen die andere das Kopfende des Querschnitts bildet.

6. Verfahren zum Verbinden zweier Harzteile durch Laserschweißen wie in Anspruch 1 dargelegt, wobei sich die vorab festgelegte Rate, mit welcher sich der Querschnitt des Kopfabschnitts ausdehnt, diskontinuierlich von dem Kopfende des Querschnitts des Kopfabschnitts (3b) zu der Schnittstelle zwischen dem Grundabschnitt (3a) und dem Kopfabschnitt (3b) hin ändert.

7. Verfahren zum Fügen zweier Harzteile durch Laserschweißen wie in Anspruch 1 dargelegt, wobei die vorab festgelegte Rate, mit welcher sich der Querschnitt des Kopfabschnitts (3b) ausdehnt, kontinuierlich von dem Kopfende des Querschnitts des Kopfabschnitts (3b) zu der Schnittstelle zwischen dem Grundabschnitt (3a) und dem Kopfabschnitt (3b) hin ändert.

8. Gehäuse zum Aufnehmen zumindest einer elektrischen oder elektronischen Komponente, wobei das Gehäuse gemacht wird, indem zumindest zwei Harzteile (1, 11) davon durch Laserschweißen gemäß dem in Anspruch 1 dargelegten Verfahren miteinander verbunden werden.

9. Gehäuse wie in Anspruch 8 dargelegt, wobei die zumindest eine elektrische oder elektronische Komponente, welche in den Gehäuse aufgenommen ist, ein elektronischer Sensor ist.

10. Gehäuse wie in Anspruch 9 dargelegt, wobei der elektronische Sensor ein G-Sensor (42) ist.

## Revendications

1. Procédé d'assemblage de deux éléments en résine (1, 11) par soudage au laser, comprenant les étapes suivantes :
la fourniture d'un premier et d'un second élément en résine (1, 11), chacun ayant une surface d'assemblage (2) ;
la formation d'une crête (3) d'une longueur sur la surface d'assemblage d'un des premier et second éléments en résine (1, 11), la crête (3) comprenant une portion de base (3a) formée sur la surface d'assemblage (2) et une portion de pointe (3b) formée sur la portion de base (3a), toutes deux s'étendant dans une direction de la longueur de la crête (3), la portion de base (3 a) ayant une section perpendiculaire à la direction de la longueur de la crête (3), qui a une largeur minimale à une interface entre la portion de base (3a) et la portion de pointe (3b) et s'étend de l'interface vers la surface d'assemblage (2) avec une pente prédéterminée, la portion de pointe (3b) ayant une section perpendiculaire à la direction de la longueur de la crête (3) qui s'étend d'une extrémité de pointe de celle-ci vers l'interface entre la portion de base (3a) et la portion de pointe (3b) avec une pente prédéterminée inférieure à celle de la section de la portion de base (3a) et a une largeur maximale au niveau de l'interface qui est inférieure ou égale à la largeur minimale de la section de la portion de base (3 a) ;
le placement de l'un des premier et second éléments en résine (1, 11) sur l'autre de sorte que les surfaces d'assemblage (2) des premier et second éléments en résine sont en regard l'une de l'autre avec la crête (3) intercalée entre elles ;
le pressage d'un des premier et second éléments en résine (1, 11) contre l'autre de façon à écraser la portion de pointe (3b) de la crête (3), ne laissant que la portion de base (3a) de celle-ci entre les surfaces d'assemblage (2) des premier et second éléments en résine ; et
l'irradiation de la portion de base (3a) de la crête avec un faisceau laser tout en pressant en continu l'un des premier et second éléments en résine contre l'autre.

2. Procédé d'assemblage de deux éléments en résine (1, 11) par soudage au laser selon la revendication 1, dans lequel la section de la portion de pointe (3b) a une forme de triangle dont un côté est sur l'interface entre la portion de base (3a) et la portion de pointe (3b) et un sommet formant l'extrémité de pointe de la section, et dans lequel la largeur maximale de la portion de pointe (3b), qui est la longueur du côté du triangle, est égale à la largeur minimale de la section de la portion de base (3a).

3. Procédé d'assemblage de deux éléments en résine par soudage au laser selon la revendication 1, dans lequel la section de la portion de pointe (3b) a une forme de triangle dont un côté est sur l'interface entre la portion de base (3a) et la portion de pointe (3b) et un sommet formant l'extrémité de pointe de la section, et dans lequel la largeur maximale de la portion de pointe (3b), qui est la longueur du côté du triangle, est inférieure à la largeur minimale de la section de la portion de base (3a).

4. Procédé d'assemblage de deux éléments en résine par soudage au laser selon la revendication 1, dans lequel la section de la portion de pointe (3b) a une forme trapézoïdale qui a un côté plus long sur l'interface entre la portion de base (3a) et la portion de pointe (3b) et un côté plus court formant l'extrémité de pointe de la section.

5. Procédé d'assemblage de deux éléments en résine par soudage au laser selon la revendication 1, dans lequel la section de la portion de pointe (3b) est en forme de rectangle dont un des côtés d'une paire opposée de côtés se trouve sur l'interface entre la portion de base (3a) et la portion de pointe (3b) et l'autre forme l'extrémité de pointe de la section.

6. Procédé d'assemblage de deux éléments en résine par soudage au laser selon la revendication 1, dans lequel la pente prédéterminée, avec laquelle la section de la portion de pointe s'étend, change de façon discontinue de l'extrémité de pointe de la section de la portion de pointe (3b) vers l'interface entre la portion de base (3a) et la portion de pointe (3b).

7. Procédé d'assemblage de deux éléments en résine par soudage au laser selon la revendication 1, dans lequel la pente prédéterminée, avec laquelle la section de la portion de pointe (3b) s'étend, change de façon continue de l'extrémité de pointe de la section de la portion de pointe (3b) vers l'interface entre la portion de base (3a) et la portion de pointe (3b).

8. Logement permettant de recevoir au moins un composant électrique ou électronique, le logement étant fabriqué en assemblant au moins deux éléments en résine (1, 11) de celui-ci ensemble par soudage au laser selon le procédé de la revendication 1.

9. Logement selon la revendication 8, dans lequel le au moins un composant électrique ou électronique, qui est reçu dans le logement, est un capteur électronique.

10. Logement selon la revendication 9, dans lequel le capteur électronique est un capteur de gravité (42).
